# EUROPEAN PATENT APPLICATION

(11) **EP 0 960 717 A2**
(43) Date of publication of application: **01.12.1999**
(21) Application number: 99201657.6
(22) Date of filing: 26.05.1999
(51) Int. Cl.: B29C 51/28, B30B 5/02

(54) **Hydroforming platen**

(30) Priority: 28.05.1998 IT MI981185
(71) Applicant: Emme 2 S.r.l., 10020 Cambiano (Torino) (IT); GENERAL ELECTRIC COMPANY, Fairfield, CT 06431 (US); Carrozzauto S.r.l., 27049 Stradella (Pavia) (IT)
(72) Inventor: Masiello, Domenico, 10020 Riva Presso Chieri (Torino) (IT)
(74) Representative: Ferroni, Filippo

(57) **Abstract**

The invention relates to a platen (1) for hydroforming sheets (50) made of plastics or other kind of material, consisting of a large block with a resilient membrane (30) applied thereupon which, during the hydroforming process, assumes the profile of a mould (51) supporting the sheet (50) to be formed, owing to the action of oil pressure supplied into a cavity (10) adjacent thereto.

Advantageously the membrane is fixed to the platen (1) by means of a frame structure which is mounted along its edge and is resiliently supported by means of a series of devices (40) wherein normal screws that serve to fix the frame structure onto the platen, are engaged.

## Description

The present invention relates in general to the hydroforming process and more specifically to a platen for implementing such process.

As is known, the technique of hydroforming has already been used for a long time in the processing of plastics and other materials; it is carried out using special presses wherein a sheet of material to be formed, placed on a mould, is deformed by a resilient membrane.

More specifically, these presses comprise a platen which may be removed when required and in which a cavity delimited on one side by the aforementioned membrane, is present; for carrying out the forming process, the platen is moved against the mould so that the membrane adheres to the sheet to be formed.

An hydraulic fluid, usually oil, with a pressure that may reach values as high as 15-35 MPa (1 MPa = 10⁶ N/m²) is then supplied inside the cavity: the resilient membrane is therefore urged with a considerable force by such a pressure against the sheet, so as to become deformed and cause in turn the sheet to assume the shape of the underlying mould.

As it can be easily appreciated, under such severe operating conditions due to the high operating pressure of the hydraulic fluid, it becomes somewhat problematic to avoid dispersion of said fluid as a result of leakage, for preventing the superficial contamination of the moulded product and avoiding possible irregularities in the forming process.

In this context, therefore, the way in which the edge of the resilient membrane is fixed to the support platen is important, because these are the points which are most exposed to the risk of leakage.

On this subject, US patents No. 5 545 026 and No. 5 466 146, both in the name of Michael and Alton Fritz and having the same description since they are derived from a single original application, but with claims which are different from one another, disclose a hydroforming press wherein the resilient membrane extends partially into the cavity where the oil is supplied and rests inside the latter by means of a side wall that surrounds it.

Between this side wall and that of the cavity there is arranged a seal which, in the case of patent No. 5 545 026, consists of a joint seal applied in the liquefied state: in this way the sealing material which is still liquid, i.e. an elastomeric compound such as a (catalytic) polymer or an epoxy compound that can be liquefied, fills each interstice between the cavity and the membrane ensuring an optimum seal.

Preferably the sealing material, once it is hardened, has a hardness which is greater than that of the resilient membrane and, in accordance with the abovementioned patent, lies in range of between 90-95 Shore A and 60-90 Shore D.

It should be pointed out that in this type of known press, the membrane is formed by means of the so-called "lost wax process": i.e. it is laid in position by applying the elastomeric base material, for example a polyurethane, directly into the cavity, allowing it to dry for the time needed in order to harden (usually about one day). It is only after this preliminary operation that the seal mentioned above is applied.

In the case of the second US patent No. 5 466 146, the seal between the side walls of the resilient membrane and the cavity is instead ensured by a series of rail elements which are arranged in position before laying the resilient membrane.

In other words, according to this second prior document the rail elements, made with the same material which in the previous case was liquefied, are fixed at first along the internal wall of the cavity (using screws or adhesive mastic) so as to form a frame, and only subsequently the resilient membrane is formed using the "lost wax" technique mentioned above.

In this way, when the polyurethane material which forms the membrane is applied, since it is still in the fluid state, it is able to adhere perfectly to the rail elements already arranged in the cavity: the polyurethane material therefore adapts itself perfectly to the aforementioned elements, being intimately bonded to them and thus giving rise to the desired seal.

As it can be understood from this short summary of the state of the art, the methods for applying the resilient membrane onto the support platen are actually fairly complex and laborious.

Firstly it must indeed be pointed out that, in the two cases referred to, laying of the membrane is performed by means of the "lost wax" technique: in practice this involves fairly long times for this operation (in the order of about 24 hours), resulting from the drying time required for the polyurethane material forming it.

It should be noted, moreover, that in both the US patents the aforementioned technique is rendered necessary by the fact that a good seal between the membrane and the sealing element is dependent on it.

The sealing element in the first case is cast molten around said membrane, adapting itself to the shape thereof and filling any empty interstices which may be present, whereas in the second case it is the membrane which, being formed in situ, adapts itself to the rail-shaped sealing elements arranged in the cavity, preventing any possible passages of oil leakages.

It must be emphasised that also removal of the resilient membrane, for example in order to replace it in the event of damage, is a long and problematic operation in the hydroforming presses according to the two aforesaid patents.

With the "lost wax" system, indeed, the membrane is firmly anchored to the surface of the cavity in the associated support platen, so that after its removal there remain however some deposited material on the surface, thus requiring a subsequent cleaning phase before a new replacement membrane is installed.

If one considers the time required to remove the membrane and that needed to apply a new one, it becomes indispensable to have in stock a series of replacement platens ready with the membrane already mounted, so as to avoid the prolongated stoppage of production when the membrane present on the hydroforming press becomes damaged. This fact therefore involves a significant increase of costs which would be preferable to avoid.

As it can be easily understood, the situation previously referred to is certainly not satisfactory for carrying out an industrial production at a certain level.

The object of the present invention therefore is to provide a hydroforming platen which has such structural and operational features, as to overcome the drawbacks associated with the state of the art described in the two abovementioned US patents.

This object is achieved by a hydroforming platen, charaterized in the appended claims.

The invention will now be better understood in the light of the description which follows, relating to a non-limiting example thereof, illustrated in the accompanying drawings wherein:
- Figures 1 and 2 show a cross-sectional front view of a platen according to the invention in respective operating conditions;
- Figures 3 and 4 show a detail of the above platen, in the operating conditions corresponding to those of Figures 1 and 2;

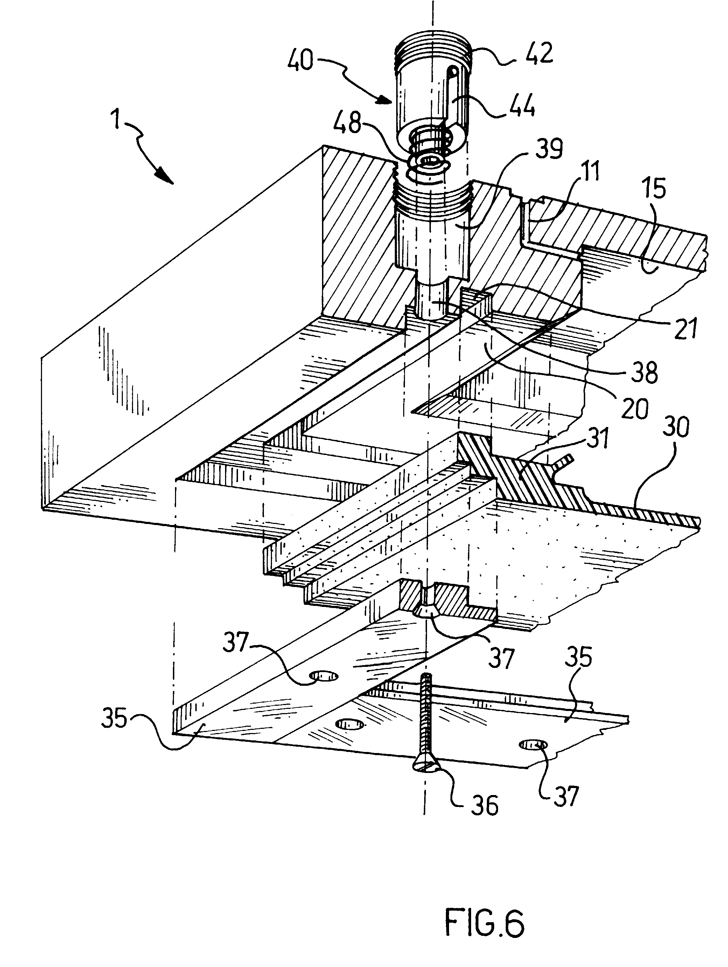

- Figures 5 and 6 show a cross-sectional perspective view of the platen according to the preceding figures, respectively with and without the membrane mounted on it;

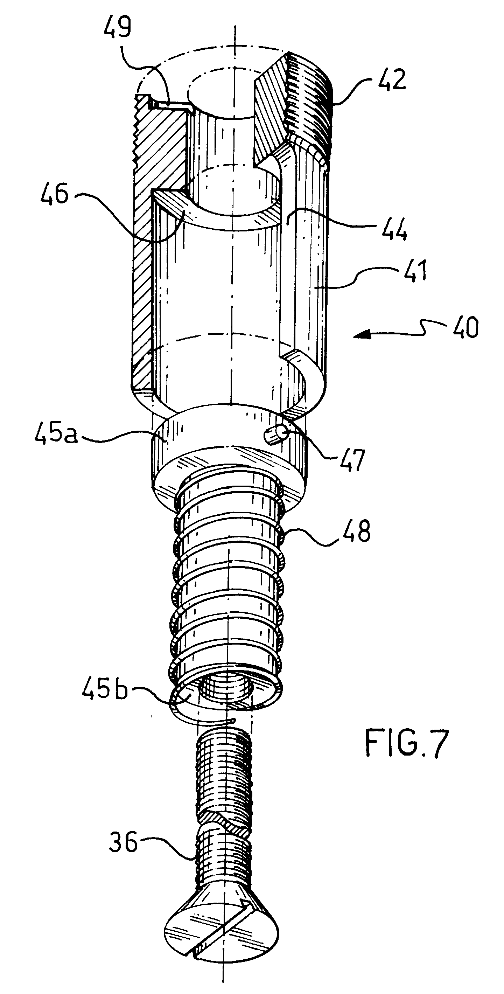

- Figure 7 shows an exploded view of a detail of the platen according to the preceding figures.

In these drawings, reference 1 indicates a hydroforming platen according to the present invention as a whole; this platen is mounted on the ram of a hydroforming press which is not shown in the figures since it is of a type already known per se.

The platen 1 consists of a metal block wherein a cavity 10 is formed, in which the hydraulic fluid is supplied via an input and output channel 11 connected to a supply pump 13.

The cavity 10 is in the form of parallelepiped with a bottom 15 and a side wall 16, which terminates in an inclined surface that defines a corresponding opening 17 of the cavity 10.

Adjacent to this inlet opening there is a flat abutment surface 20 which surrounds the cavity 10, alongside thereof being located a seat 21.

As can be seen from the drawings, a membrane 30 is also mounted on the platen 1.

This membrane is made of elastomeric material, such as polyurethane for example, and has peripherally an edge 31 which is thicker than its central part devised to be deformed by the action of the hydraulic fluid under pressure; it is not laid using "lost wax" technique directly onto the platen 1, but is instead formed separately and therefore mounted in a simple manner, as will result more clearly below.

The edge 31 has a profile matching that of the aforementioned abutment surface 20 and seat 21, against which it is kept urged by a frame structure formed by a series of shims 35 secured to the platen 1 with screws 36, as will be explained more clearly later.

In this connection it should be noted that such edge 31 is provided with an advantageous projecting lug 32, which rests on the inclined surface 17 of the cavity 10 when the membrane 30 is mounted on the platen 1: more particularly, the lug 32 is pressed against the inclined surface 17 by the pressure of the hydraulic fluid during hydroforming and therefore acts as a sealing element preventing leakage of the fluid between the edge 31 of the membrane and the abutment surface 20.

Considering now in detail the shims 35, they form a frame extending along the entire edge 31 of the membrane 30, and are arranged along each side thereof corresponding to those of the parallelepiped-shaped cavity 10; furthermore, they are made of metal or other kind of material provided it has good rigidity and mechanical strength properties.

As mentioned above, the shims are fixed to the platen 1 with screws 36 and have a stepped profile mating that of the edge 31 of the membrane 30.

More specifically, the screws 36 pass into corresponding threaded holes 37 of the shims 35 and are screwed so that their head does not protrude from the surfaces thereof; the threaded shank of each screw 36 passes through a port 38 in the platen 1 and then engages with a device 40 arranged at the end of the port 38, that allows them axial oscillation in contrast to a resilient recall action.

The device 40 consists of an external cylindrical body 41, essentially in the form of a sleeve, which has an external thread 42 for screwing thereof into a receiving bore 39 in the platen 1; a groove 44 is moreover formed in the wall of the cylindrical body 41, extending along a generatrix thereof.

The cylindrical body 41 accomodates an insert 45 formed by a base 45a which comes into abutment against an internal shoulder 46 of the body and which has a passing pin 47 projecting into the groove 44, and by a female thread 45b extending from this base.

A spring 48 is mounted around the female thread 45b and, as can be seen from the drawings, when a shim fixing screw 36 is screwed in, it remains compressed between the base 45a and the bottom of the bore 39 inside which the cylindrical body 41 is located: in this way the resilient recall force mentioned above is created.

Finally, in order to ensure a better handling of the cylindrical body 41, in this example there is provided a groove 49 for the tip of a tool such as a spanner or the like, with which it can be easily screwed into and unscrewed from the bore 39.

The platen according to this example operates in the following manner.

It just has to be pointed out, however, that in order to carry out the working cycle, the platen is mounted on a press of the known type (as already mentioned) wherein a sheet 50 to be formed is placed on a mould 51 that, in turn, rests on a support table 52; the latter has the function of opposing the action of the press ram on which the platen is mounted and which, in this case, is lowered from above. Obviously it is possible to have presses wherein the table 52 is immobile or others where the table has a movement opposing that of the platen; this will depend only on choices relating to the mechanical design.

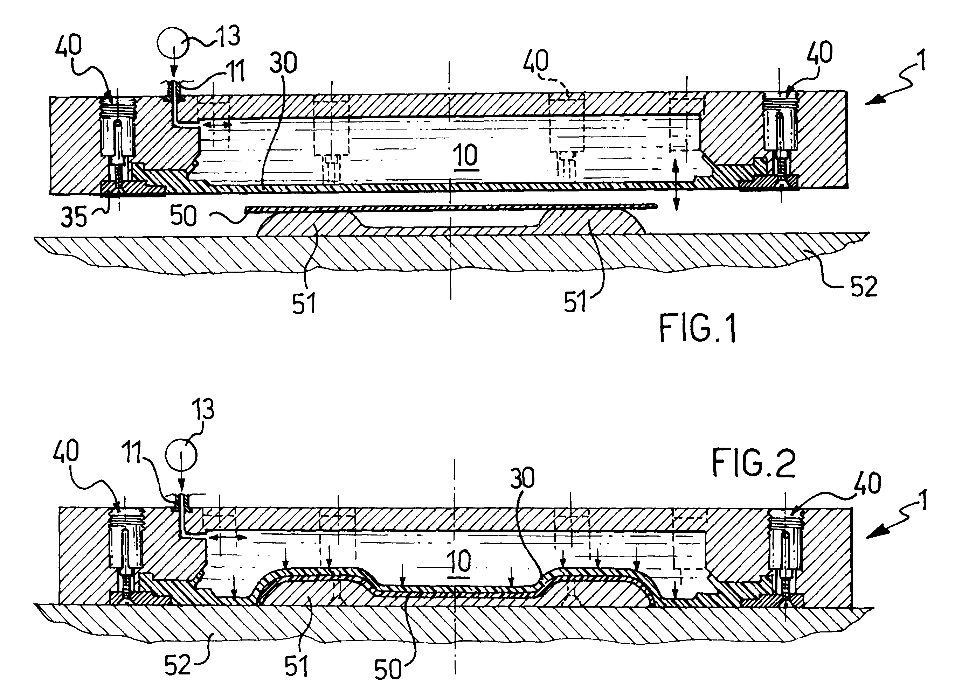

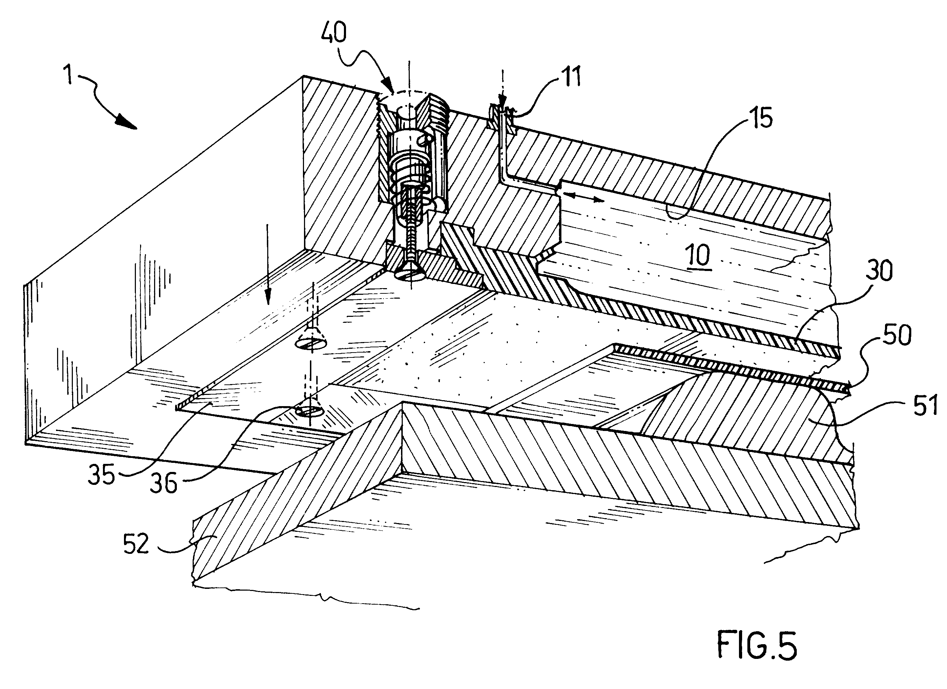

As it can be seen from Figures 1, 3 and 5, in this example the thickness chosen for the edge 31 of the membrane and the degree of tightening of the screws 36 are such that the shims 35 protrude slightly from the surface of the platen 1 towards the table 52, when the press is in the rest condition, i.e. when the platen is separated from the table.

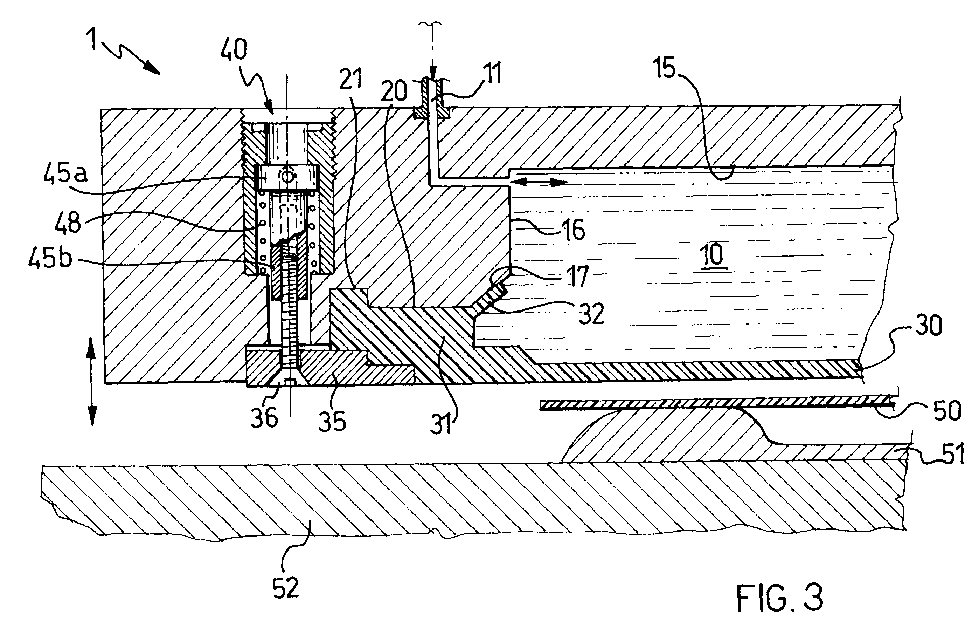

The shims 35 are also subject to the resilient force of the springs 48 which, through the screws 36, recall them towards the platen 1: consequently the edge 31 of the membrane remains squashed between the abutment surface 20 of the platen 1 and the shims themselves which, in this condition, are slightly separated from the platen on their side looking towards the port 38 (see fig. 3).

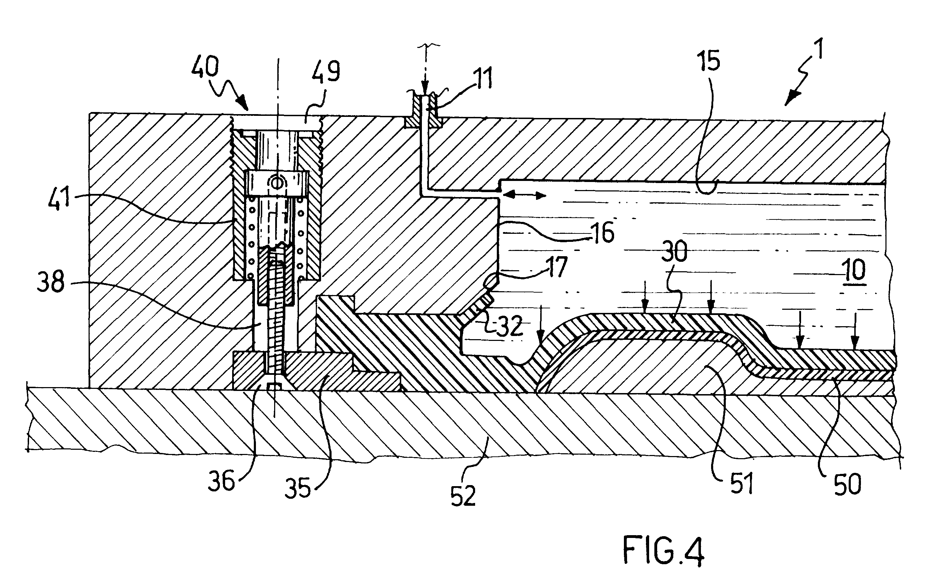

The platen 1 may now be lowered against the table 52: in result of this the shims 35 which as mentioned above protrude slightly with respect to it, are urged towards the edge of the membrane 30, pressing it further against the abutment surface 20 (see fig. 4).

The force with which the platen 1 is pressed against the table 52 will depend on the pressure of the hydraulic fluid required for hydroforming; this force in fact must avoid separation of the platen and from the table when the pressure reached inside the cavity 10 deforms the membrane 30. At this stage it is then possible to supply oil into the cavity 10 in order to reach the pressure required in order to form the sheet 50 on the mould 51. This pressure, in addition to deforming the membrane 30, also tends to raise the edge 31 thereof with respect to the abutment surface 20: but the aforementioned edge is clamped by the shims 35 on which the opposing reaction of the table 52 acts and therefore there is no risk of separation thereof.

Once forming of the sheet 51 has been completed, the pressure in the cavity 10 is reduced to a predetermined level and only then the platen 1 is moved away from the table 52.

Consequently during this phase the edge 31 of the membrane is able to return into the initial condition, owing to the resilience of the polymeric material from which it is made: it should be noted, however, that the shims 35 subjected to the resilient recalling force of the springs 48 always act on said edge, so that it remains pressed against the abutment surface 20 thereby ensuring the necessary seal against the oil still present in the cavity 10.

In the light of this explanation it is possible to understand the reasons why the platen according to invention achieves the initial object thereof. First of all it must be considered that the deformable membrane 30 is prepared separately from the platen 1 and is mounted thereon only at the time required.

The mounting operation is performed simply and rapidly, since it is sufficient to remove the shims 35 by unscrewing the corresponding screws 36, removing the membrane to be replaced which, since it is not bonded or applied with the "lost wax" technique, does not give rise to any resistance, and finally laying the new membrane by fixing it again with the shims and the screws; all of this is performed rapidly and does not require skilled labour.

This important result is made possible by the fact that in the platen according to the invention, between the membrane 30 and the surface of the cavity 10 where the hydraulic fluid is supplied, there is no sealing element as instead in the case of both the US patents considered above. Indeed, in the platen according to the invention it is the edge 31 of the membrane 30 which ensures the seal preventing leakages of oil toward the exterior, without the need for any specific sealing element to be liquefied in situ or to be installed in the form of a rail.

This occurs because the deformability of the edge 31 cooperates with the mechanical compressive action exerted by the shims 35, which keep the edge pressed against the abutment surface 20; in this manner the edge is deformed and adheres perfectly to the surfaces of the platen and of the shims with which it is in contact, preventing any possible leakage of oil. On this subject it must also be noted that the presence of the seat 21, as well as that of the various steps on the edge 31 and on the surfaces of the platen, has the function of making the seal more effective in addition to keeping the edge properly positioned.

It shall be further emphasised that in the platen according to the invention, the shims 35 made of metal or in any case of suitably strong material, merely perform a mechanical function and not a sealing one: in practice it can be said that the edge of the membrane acts as a seal kept in position by the shims.

In this connection it must also be pointed out that, unlike the prior art, in the platen according to the invention both the membrane 30 and its edge 31 are located outside the cavity 10: that is to say, as it can be seen from the Figures, they do not extend along the side wall 16 or the bottom 15 of the cavity, nor are in contact with them.

The other important feature of the invention consists in the resilient assembly system of the screws 36 which hold the shims 35 fast.

It is indeed important to remember that the pressure of the hydraulic fluid used in hydroforming processes, may reach the high values mentioned at the beginning of this description (15-35 MPa); this means that, in order to keep the membrane 30 and its edge 31 immobile, a considerable force is required.

As it has been shown, in the platen according to the invention this force is exerted by the shims 35 with the aid of the opposing reaction of the table 52: this is possible because the shims 35 are fixed resiliently to the platen 1 by means of the screws 36 passing through the holes 37 and are therefore able to move against the action of the springs 48.

In this way, in fact, when the edge 31 of the membrane 30 tends to lift owing to the effect of the pressure of the hydraulic fluid, the shims 35 follow this lifting movement in a resilient manner, until they come into contact with the surface of the table 52: the screws 36 which retain them are therefore not stressed particularly since, during this stage, the lifting force which acts on the shims is balanced by the reaction of the table 52 and not by the screws.

Different would be the case if the screws 36 were unable to oscillate resiliently in the axial direction, namely if the devices 40 were not present in the platen 1 and, instead of them, there were simple threaded bores into which the screws 36 engage.

In such a situation the lifting force acting on the shims 35 when oil under pressure is supplied, would be opposed only by the screws 36 which hold them to the platen: it is indeed evident that in such a case, lacking the possibility of resilient displacements of the shims and the screws, the table 52 cannot intervene to oppose this lifting force which acts on them and which is therefore released onto the screws with the risk of their breaking.

It has also to be mentioned that in the last case just considered the table 52 must not be in abutment against the shims during hydroforming, because this would mean that the shims project from the surface of the platen I towards the table 52 and therefore the latter could not rest correctly against ther former.

Obviously variations of the invention with respect to the example described herein cannot be excluded.

By way of example it is indeed not hard to think about the possibility of devising different systems for the resilient fixing of the shims, for instance by using spring-loaded tie-rods or the like.

The solution consisting of the screws 36 and the devices 40 appears to be advantageous, however, because it is simple to manufacture (and hence with low-cost) as well as functional (the devices and the screws need only be screwed and unscrewed when required for maintenance of the platen). Furthermore, the shape of the membrane 30 and its edge 31 may differ from the quadrilateral one described above, and likewise the shims 35 could also be curved, should the opening 17 of the cavity not be rectangular but for example, circular or in any case have a rounded shape. In the same manner, the cavity 10 could also have a configuration different from the parallelepipedal shape mentioned here.

Finally it just needs to be mentioned that in order to implement the invention, it is not necessary that in the rest condition the frame structure formed by the shims, slightly protrudes from the surrounding surface of the platen likewise in the example referred to (see Fig. 3). Indeed if the frame were instead set lower with respect to this surface, when the fluid is supplied into the cavity the edge 31 would tend to lift up owing to the effect of the pressure overcoming the opposition force of the springs, until the shims are brought into abutment against the table 52 and the action of the latter is again used in accordance with the teaching already described in the preceding example.

All these changes, however, are to be regarded as falling within the scope of the claims which follow.

## Claims

1. Platen for hydroforming sheet material, comprising a cavity (10) which has an open side where an opening (17) is located and in which a hydraulic fluid is supplied, a deformable membrane (30) closing such cavity at the open side thereof and provided peripherally with an edge (31), means (35, 36, 40) for securing the edge of the membrane to the platen, characterized in that these means comprise a frame structure applied along the aforesaid edge and overlapping it at least partially, so as to keep it pressed against an abutment surface (20) of the platen, and in that this frame structure is resiliently supported thereby cooperating with a mould-carrying table (52) opposed to the platen during hydroforming.

2. Platen according to Claim 1, wherein the abutment surface (20) against which the edge (31) of the membrane (30) is pressed, is located around the opening (17) of the cavity (10).

3. Platen according to Claims 1 and 2, wherein the frame structure is formed by a plurality of shims (35) arranged one after another along the edge (31) of the membrane (30).

4. Platen according to any of Claims 1 to 3, wherein the frame structure is secured with screws (36) passing through it and engaged in a respective female thread (45b), which is supported resiliently to retain the corresponding screw towards the platen.

5. Platen according to Claim 4, wherein the screws (36) are coupled with a respective device (40) comprising an external cylindrical body (41) mounted in a bore (39) of the platen, in which there is slidably accomodated an insert (45) formed by a base (45a) with the female thread (45b) extending therefrom, and a spring (48) arranged around the female thread, compressed between the bottom of the bore (39) and the aforesaid base (45a).

6. Platen according to any of the preceding claims, wherein the edge (31) of the membrane (30) is thicker than the part thereof to be deformed during hydroforming and is provided with a stepped profile mating those of the frame structure and of the abutment surface (20) around which a seat (21) is arranged.

7. Platen according to any of the preceding claims, wherein the opening (17) of the cavity (10) is defined by a surface inclined with respect to the side wall (16) of the cavity itself, and wherein the membrane (30) is provided with a lug (32) which rests on the inclined surface thereby forming a sealing element.

8. Hydroforming press comprising a platen (1) according to any of the preceding claims.
